# EUROPÄISCHE PATENTSCHRIFT

(11) **EP 2 576 725 B1**
(45) Veröffentlichungstag und Bekanntmachung des Hinweises auf die Patenterteilung: **25.02.2015**
(21) Anmeldenummer: 11718291.5
(22) Anmeldetag: 26.04.2011
(51) Int. Cl.: C09K 11/77

(54) **LEUCHTSTOFFE**
LUMINESCENT SUBSTANCES
SUBSTANCES LUMINESCENTES

(30) Priorität: 22.05.2010 DE 102010021341
(43) Veröffentlichungstag der Anmeldung: 10.04.2013
(73) Patentinhaber: Merck Patent GmbH, 64293 Darmstadt (DE)
(72) Erfinder: WINKLER, Holger, 64291 Darmstadt (DE); BENKER, Andreas, 64686 Lautertal (DE); PETRY, Ralf, 64347 Griesheim (DE); VOSGROENE, Tim, 64372 Ober-Ramstadt (DE)
(86) Internationale Anmeldenummer: PCT/EP2011/002084
(87) Internationale Veröffentlichungsnummer: WO 2011/147517

(56) Entgegenhaltungen:
- EP-A1- 1 710 289
- EP-A1- 1 854 863
- WO-A1-2005/103199
- WO-A1-2006/006099
- CN-A- 1 169 587
- CN-A- 1 927 996
- US-A- 4 807 241
- LI ET AL: "Luminescent properties of LuAG:Ce phosphors with different Ce contents prepared by a sol-gel combustion method", OPTICAL MATERIALS, ELSEVIER SCIENCE PUBLISHERS B.V. AMSTERDAM, NL, Bd. 29, Nr. 9, 29. März 2007 (2007-03-29), Seiten 1138-1142, XP022003629, ISSN: 0925-3467, DOI: DOI:10.1016/J.OPTMAT.2006.05.002
- WU J L ET AL: "SPECTRAL PROPERTIES OF VARIOUS CERIUM DOPED GARNET PHOSPHORS FOR APPLICATION IN WHITE GAN-BASED LEDS", STRUCTURE AND MECHANICAL BEHAVIOR OF BIOLOGICAL MATERIALS : SYMPOSIUM HELD MARCH 29 - 31, 2005, SAN FRANCISCO, CALIFORNIA, U.S.A; [MATERIALS RESEARCH SOCIETY SYMPOSIUM PROCEEDINGS], WARRENDALE, PA. : MATERIALS RESEARCH SOCIETY, US, Bd. 658, 1. Januar 2001 (2001-01-01), Seiten GG11.8.1-GG11.8.6, XP009036120, ISBN: 978-1-55899-828-5

## Beschreibung

Die Erfindung betrifft Leuchtstoffmischungen, Verfahren zur Herstellung dieser Mischungen und deren Verwendung als Konversionsleuchtstoffe bzw. in Leuchtmitteln.

LEDs gewinnen zunehmend an Bedeutung - sowohl als Beleuchtungsmittel als auch bei der Verwendung als Hintergrundbeleuchtung in Flüssigkristall-Displays (FK-Displays). Diese neuartigen Lichtquellen weisen gegenüber den herkömmlichen Kaltkathodenfluoreszenzlampen (cold cathode fluorescence lamps - CCFL) mehrere Vorteile auf, wie längere Lebensdauer, potentielle Energieersparnis, Abwesenheit schädlicher Inhaltsstoffe (wie Quecksilber in CCFL).

In der Vergangenheit wurden beispielsweise Anordnungen aus LEDs, die blaues, grünes und rotes Licht emittieren, als Hintergrundbeleuchtungsquelle für FK-TV-Anwendungen eingesetzt. Dieser Multi-Chip-Ansatz hat jedoch einige Nachteile: es ist ausgesprochen schwierig, drei verschiedene Chipmaterialien zu kombinieren und Einheitlichkeit und Stabilität der Lichtparameter wie Farbpunkt sicherzustellen.

Es wurden daher pcLEDs ("phosphor converted LEDs") als Lichtquellen für die Verwendung als Hintergrundbeleuchtung eingeführt. Diese enthalten üblicherweise einen grünen Leuchtstoff und einen tiefroten Leuchtstoff zusammen mit der blauen Lichtemission eines LED-Chips, die entsprechend den Transmissionsspektren des Farbfilters (Transmissionsbanden im blauen, grünen und roten Bereich des Spektrums) angeglichen sind. Theoretisch ermöglicht ein derartiger Aufbau Farbräume, die viel größer als der übliche sRGB sind. Aufgrund von Engpässen in der Verfügbarkeit geeigneter Qualitäten, besteht noch immer Bedarf an weiteren optimierten Leuchtstoffen und/oder Leuchtstoff-Gemischen.

Überraschenderweise wurde nun gefunden, dass bestimmte Leuchtstoffkombinationen in vergleichsweise geringen Mengen eingesetzt bereits gute LED-Qualitäten ergeben.

Aus EP 1854863 ist ein Phosphor der Formel Y₂.₈₄₁Lu_{0.06}Ce_{0.099}Al_{4.3}Ga₀.₇O₁₂ bekannt. Mischungen dieses Phosphors mit einem rot emittierenden Eu- oder Ce-dotierten Nitrid- oder Oxynitrid-Leuchstoff sind nicht offenbart

Aus WO 2005/103199 ist der rot emittierende Eu-dotierte Nitridleuchtstoff CaLaSiN₃:Eu²⁺ bekannt. Weiterhin ist aus diesem Dokument bekannt, dass Mischungen dieses Phosphors mit einem Phosphorhost zu einem verbesserten Farbwiedergabeindex führen. Ein Kombination dieses Phosphors mit einem Phosphor gemäß der vorliegenden Erfindung ist nicht offenbart.

Eine erste Ausführungsform der vorliegenden Erfindung ist daher eine Mischung enthaltend mindestens einen Leuchtstoff der Formel I,

Aₐ Lu_{c},CeₓAlₗ,GaₘO₁₂ (I)

wobei
A steht für ein oder mehrere Elemente ausgewählt aus Y, Gd, Se, Sm, Tb, Pr, Th, Ir, Sb,Bi und
a steht für einen Wert aus dem Bereich von 0 bis 2,895 und
c steht für einen Wert aus dem Bereich von 0,1 bis 2,995 und
x steht für einen Wert aus dem Bereich von 0,005 bis 1 und
wobei a, c und x so gewählt sind, dass gilt a + c + x = 3 und
I steht für einen Wert aus dem Bereich von 0 bis 4,99 und
m steht für einen Wert aus dem Bereich von 0,01 bis 5, wobei I und m so gewählt sind, dass gilt l + m = 5 und
und mindestens einen rot emittierenden Leuchtstoff, dadurch gekennzeichnet, dass der rot emittierende Leuchtstoff ausgewählt ist aus Eu- und/oder Ce-dotierten Nitriden oder Oxynitriden.

Erfindungsgemäße Mischungen in geringen Mengen eingesetzt ergeben bereits gute LED-Qualitäten. Bei Verwendung bevorzugter Mischungen lassen sich die Leuchtstoffmengen gegenüber dem Stand der Technik, insbesondere von roten Leuchtstoffen bei gleichbleibender LED-Qualität, sogar reduzieren bzw. die LED-Qualität kann gesteigert werden kann, wenn übliche Mengen eingesetzt werden. Die LED-Qualität wird dabei über übliche Parameter, wie beispielsweise den Color Rendering Index, die Correlated Color Temperature, Lumenäquivalente oder absolute Lumen, bzw. den Farbpunkt in CIE x und CIE y Koordinaten beschrieben.

Der Color Rendering Index oder CRI ist eine dem Fachmann geläufige, einheitslose lichttechnische Größe, welche die Farbwiedergabetreue einer künstlichen Lichtquelle mit derjenigen des Sonnenlichtes bzw. und Filamentlichtquellen vergleicht (die beiden letztgenannten besitzen einen CRI von 100).

Die CCT oder Correlated Color Temperature ist eine dem Fachmann geläufige, lichttechnische Größe mit der Einheit Kelvin. Je höher der Zahlenwert, desto kälter erscheint dem Betrachter das Weißlicht einer künstlichen Strahlungsquelle. Die CCT folgt dem Konzept des Schwarzlichtstrahlers, dessen Farbtemperatur der sog. Planckschen Kurve im CIE Diagramm verläuft.

Das Lumenäquivalent ist eine dem Fachmann geläufige lichttechnische Größe mit der Einheit lm/W, die beschreibt, wie groß der photometrische Lichtstrom in Lumen einer Lichtquelle bei einer bestimmten radiometrischen Strahlungsleistung mit der Einheit Watt, ist. Je höher das Lumenäquivalent ist, desto effizienter ist eine Lichtquelle.

Das Lumen ist eine dem Fachmann geläufige, photometrische lichttechnische Größe, welche den Lichtstrom einer Lichtquelle, der ein Maß für die gesamte von einer Strahlungsquelle ausgesandte sichtbare Strahlung ist, beschreibt. Je größer der Lichtstrom, desto heller erscheint die Lichtquelle dem Beobachter.

CIE x und CIE y stehen für die Koordinaten im dem dem Fachmann geläufigen CIE Normfarbdiagramm (hier Normalbeobachter 1931), mit denen die Farbe einer Lichtquelle beschrieben wird.
Alle oben aufgeführten Größen werden nach dem Fachmann geläufigen Methoden aus Emissionsspektren der Lichtquelle berechnet.

Bevorzugte Mischungen enthalten mindestens einen Leuchtstoff der Formel I, der dadurch gekennzeichnet ist, dass a steht für einen Wert aus dem Bereich von 0 bis 0,5, vorzugsweise aus dem Bereich 0 bis 0,3 und wobei insbesondere bevorzugt gilt a = 0 bis 0,2.
Ebenfalls bevorzugt sind Mischungen, die dadurch gekennzeichnet sind, dass die Mischung mindestens einen Leuchtstoff der Formel I enthält, wobei x steht für einen Wert aus dem Bereich von 0,01 bis 0,5, vorzugsweise aus dem Bereich 0,015 bis 0,2 und insbesondere bevorzugt aus dem Bereich 0,02 bis 0,1.
Weiterhin bevorzugt sind Mischungen, die mindestens einen Leuchtstoff der Formel I enthalten, der dadurch gekennzeichnet ist, dass m steht für einen Wert aus dem Bereich von 0,05 bis 3, vorzugsweise aus dem Bereich 0,1 bis 2 und insbesondere bevorzugt aus dem Bereich 0,5 bis 1,5.
Insbesondere bevorzugt sind dabei solche Mischungen bei denen die Indices a, x und m Kombinationen der angegebenen bevorzugten Bereiche darstellen.

Entsprechende Verbindungen der Formel I sind dem Fachmann wohl bekannt. So werden beispielsweise in J.M. Robertson, M.W.vanTol, W.H. Smits, J.P.H.Heynen, Philps HJ. Res. 36 (1981) 15-30 die Leuchtstoffeigenschaften von in unterschiedlichen Mengen mit Lutetium und Gallium substituierten YAG-Derivaten untersucht.

Erfindungswesentlich ist dabei, dass die Mischung mindestens einen rot emittierenden Leuchtstoff enthält, der ausgewählt ist aus Eu- und/oder Ce-dotierten Nitriden oder Oxynitriden.

Im Kontext dieser Anmeldung wird als rote Emission oder rotes Licht solches Licht bezeichnet, dessen Intensitätsmaximum zwischen 610 nm und 670 nm Wellenlänge liegt, entsprechend wird als grün solches Licht bezeichnet, dessen Maximum zwischen 508 nm und 550 nm Wellenlänge liegt und als gelb Licht, dessen Maximum zwischen 551 nm und 585 nm Wellenlänge liegt.

Dabei kann es insbesondere bevorzugt sein, wenn der rot emittierende Leuchtstoff ausgewählt ist aus (Ca,Sr,Ba)₂Si₅N₈:Eu, (Ca,Sr)AlSiN₃:Eu, (Ca,Sr,Ba)SiN₂:Eu, (Ca,Sr,Ba)₆Si₃O₆N₄:Eu, A_{2-0,5y-x} Euₓ Si₅ N_{8-y} O_{y}, wobei A steht für ein oder mehrere Elemente ausgewählt aus Ca, Sr, Ba und x steht für einen Wert aus dem Bereich von 0,005 bis 1 und y steht für einen Wert aus dem Bereich von 0,01 bis 3 oder Varianten der genannten Verbindungen, bei denen einzelne Gitterpositionen durch andere chemische Elemente, wie Alkalimetalle, Aluminium, Gallium, oder Gadolinium, substituiert sind bzw. solche weitere Elemente als Dotierstoff Fehlstellen besetzen. Dem Fachmann bekannte und geeignete Materialsystem stellen Siliconitride und Alumosilikonitride dar (vgl. Xie, Sci. Technol. Adv. Mater. 2007, 8, 588-600): 1-1-2-Nitride, wie z.B. das CaSiN₂:Eu²⁺ (Le Toquin, Cheetham, Chem. Phys. Lett. 2006, 423, 352.), 2-5-8-Nitride, wie das (Ca,Sr,Ba)₂Si₅N₈: Eu²⁺ (Li et al., Chem. Mater. 2005, 15, 4492) und Alumosilikonitride, wie das (Ca,Sr)AlSiN₃:Eu²⁺ (K. Uheda et al., Electrochem. Solid State Lett. 2006, 9, H22).

Die Verbindung A₂₋₀,_{5y-x} Euₓ Si₅ N_{8-y} O_{y} , wobei A steht für ein oder mehrere Elemente ausgewählt aus Ca, Sr, Ba und x steht für einen Wert aus dem Bereich von 0,005 bis 1 und y steht für einen Wert aus dem Bereich von 0,01 bis 3 ist in der Patentanmeldung EP10000933.1 beschrieben und wird im folgenden Verbindung der Formel II genannt. Dabei kann die Verbindung als Reinstoff oder im Gemisch mit mindestens einer weiteren Silicium und Sauerstoff enthaltenden Verbindung vorliegen, wobei es bevorzugt ist, wenn die mindestens eine weitere Silicium und Sauerstoff enthaltende Verbindung ein Reaktionsnebenprodukt der Herstellung der Verbindung der Formel II ist und diese die anwendungsrelevanten optischen Eigenschaften der Verbindung der Formel II nicht nachtelig beeinflusst. Daher ist eine Mischung enthaltend eine Verbindung der Formel II, die erhältlich ist durch ein

Verfahren, bei dem in einem Schritt a) geeignete Edukte ausgewählt aus binären Nitriden, Halogeniden und Oxiden oder entsprechenden reaktiven Formen dazu gemischt werden und das Gemisch in einem Schritt b) unter reduktiven Bedingungen thermisch behandelt wird ein weiterer Erfindungsgegenstand.
In den erfindungsgemäßen Verbindungen der Formel II steht A in bevorzugten Ausführungsformen für Sr, während x in bevorzugten Ausführungsformen steht für einen Wert aus dem Bereich von 0,01 bis 0,8, vorzugsweise aus dem Bereich 0,02 bis 0,7 und insbesondere bevorzugt aus dem Bereich 0,05 bis 0,6 und insbesondere bevorzugt aus dem Bereich 0,1 bis 0,4 und y in bevorzugten Ausführungsformen steht für einen Wert aus dem Bereich von 0,1 bis 2,5, vorzugsweise aus dem Bereich 0,2 bis 2 und insbesondere bevorzugt aus dem Bereich 0,22 bis 1,8.
Zur Herstellung von Leuchtstoffe der Formel II werden in einem Schritt a) geeignete Edukte ausgewählt aus binären Nitriden, Halogeniden und Oxiden oder entsprechenden reaktiven Formen dazu gemischt und das Gemisch in einem Schritt b) unter reduktiven Bedingungen thermisch behandelt. Bei der oben genannten thermischen Behandlung ist es bevorzugt, wenn diese zumindest teilweise unter reduzierenden Bedingungen durchgeführt wird. Im Schritt b) erfolgt die Umsetzung üblicherweise bei einer Temperatur oberhalb 800 C, vorzugsweise bei einer Temperatur oberhalb 1200°C und insbesondere bevorzugt im Bereich von 1400°C - 1800°C. Die reduktiven Bedingungen werden dabei z.B. mit Kohlenmonoxid, Formiergas oder Wasserstoff oder zumindest Vakuum oder Sauerstoffmangel-Atmosphäre eingestellt, bevorzugt im Stickstoffstrom, vorzugsweise im N2/H2-Strom und insbesondere bevorzugt im N2/H2/NH3-Strom eingestellt. Soll die Verbindungen der Formel II rein hergestellt werden, so kann dies entweder über genaue Kontrolle der Eduktstöchiometrie oder durch mechanisches Abtrennen der Kristalle der Verbindungen der Formel II von den glasartigen Anteilen erfolgen. Die Abtrennung kann beispielsweise über die unterschiedliche Dichte, Partikelform oder Partikelgröße nach dem Fachmann bekannten Trennmethoden erfolgen.

Dabei liegen erfindungsgemäß der mindestens eine Leuchtstoff der Formel I und der mindestens eine rot emittierende Leuchtstoff, der ausgewählt ist aus Eu- und/oder Ce-dotierten Nitriden oder Oxynitriden, üblicherweise im Gewichtsverhältnis 20:1 bis 1:1 vor. Erfindungsgemäß bevorzugt ist es, wenn der mindestens eine Leuchtstoff der Formel I und der mindestens eine rot emittierende Leuchtstoff im Gewichtsverhältnis 10:1 bis 3:1 und insbesondere bevorzugt 6:1 bis 4:1 vorliegen.

In einer weiteren Ausführungsform kann die Mischung zusätzlich mindestens einem weiteren der folgenden Leuchtstoffmaterialien enthalten:
Oxide, Molybdate, Wolframate, Vanadate, Granate, Silicate jeweils einzeln oder Gemischen derselben mit einem oder mehreren Aktivatorionen wie Ce, Eu, Mn, Cr und/oder Bi. Dies ist besonders dann von Vorteil, wenn bestimmte Farbräume eingestellt werden sollen.

Ein weiterer Erfindungsgegenstand ist ein Verfahren zur Herstellung einer Leuchtstoffmischung, bei dem mindestens ein Leuchtstoff der Formel I mit mindestens einem rot emittierenden Leuchtstoff, der ausgewählt ist aus Eu- und/oder Ce-dotierten Nitriden oder Oxynitriden, gemischt wird.

Das Absorptions- und Emissionsspektrum, das thermische Löschverhalten und die Abklingzeit τ_{1/e} lumineszierender Materialien gemäß der Formel I hängen stark von der exakten Zusammensetzung der trivalenten Kationen ab. Ausschlaggebend für die oben genannten spektroskopischen Eigenschaften ist die Kristallfeldstärke der Dodekaederposition auf der Ce³⁺ eingebaut bzw. der kovalente Charakter der Ce-O-Bindungen, d.h. die effektive negative Ladung der Sauerstoffanionen und der Überlappung der Anionen- und Metallorbitale.

Die Partikelgröße der erfindungsgemäßen Leuchtstoffe beträgt üblicherweise zwischen 50 nm und 30 µm, vorzugsweise zwischen 1 µm und 20 µm.

In einer weiteren bevorzugten Ausführungsform besitzen die Leuchtstoffe in Partikelform eine geschlossene Oberflächenbeschichtung, die aus SiO₂, TiO₂, Al₂O₃, ZnO, ZrO₂ und/oder Y₂O₃ oder Mischoxide daraus besteht. Diese Oberflächenbeschichtung hat den Vorteil, dass durch eine geeignete Abstufung der Brechungsindices der Beschichtungsmaterialien eine Anpassung des Brechungsindex mit der Umgebung erzielt werden kann. In diesem Fall wird die Streuung des Lichtes an der Oberfläche des Leuchtstoffes verringert und ein größerer Anteil des Lichtes kann in den Leuchtstoff eindringen und dort absorbiert und konvertiert werden. Außerdem ermöglicht es die Brechungsindex-angepasste Oberflächebeschichtung, dass mehr Licht aus dem Leuchtstoff ausgekoppelt wird, weil die interne Totalreflexion verringert wird.

Zudem ist eine geschlossene Schicht dann vorteilhaft, wenn der Leuchtstoff verkapselt werden muss. Dies kann erforderlich sein, um einer Empfindlichkeit des Leuchtstoffes oder Teilen davon gegen diffundierendes Wasser oder andere Materialien in der unmittelbaren Umgebung zu entgegnen. Ein weiterer Grund für die Verkapselung mit einer geschlossenen Hülle ist eine thermische Entkoppelung des eigentlichen Leuchtstoffes von der Wärme, die im Chip entsteht. Diese Wärme führt zu einer Verringerung der Fluoreszenzlichtausbeute des Leuchtstoffes und kann auch die Farbe des Fluoreszenzlichts beeinflussen. Schließlich ist es möglich durch eine solche Beschichtung die Effizienz des Leuchtstoffes zu erhöhen, indem im Leuchtstoff entstehende Gitterschwingungen in ihrer Ausbreitung an die Umgebung gehindert werden.

Außerdem bevorzugt ist es, wenn die Leuchtstoffe eine poröse Oberflächenbeschichtung besitzen, die aus SiO₂, TiO₂, Al₂O₃, ZnO, ZrO₂ und/oder Y₂O₃ oder Mischoxide daraus oder aus der Leuchtstoffzusammensetzung besteht. Diese porösen Beschichtungen bieten die Möglichkeit, den Brechungsindex einer Einfachschicht weiter zu reduzieren. Die Herstellung solcher poröser Beschichtungen kann nach drei herkömmlichen Methoden geschehen, wie sie in WO 03/027015 beschrieben werden, die voll umfänglich in den Kontext der vorliegenden Anmeldung durch Bezugnahme eingefügt wird: das Ätzen von Glas (z.B. Natron-Kalk-Gläser (siehe US 4019884)), das Aufbringen einer porösen Schicht und die Kombination aus poröser Schicht und einem Ätzvorgang.

In einer weiteren bevorzugten Ausführungsform besitzen die Leuchtstoffpartikel eine Oberfläche, die funktionelle Gruppen trägt, welche eine chemische Anbindung an die Umgebung, vorzugsweise bestehend aus Epoxy- oder Silikonharz ermöglicht. Diese funktionellen Gruppen können z.B. über Oxogruppen angebundene Ester oder andere Derivate sein, die mit Bestandteilen der Bindemittel auf Basis von Epoxiden und / oder Silikonen Verknüpfungen eingehen können. Solche Oberflächen haben den Vorteil, dass eine homogene Einmischung der Leuchtstoffe in das Bindemittel ermöglicht wird. Des Weiteren können dadurch die rheologischen Eigenschaften des Systems Leuchtstoff / Bindemittel und auch die Topfzeiten in einem gewissen Masse eingestellt werden. Damit wird die Verarbeitung der Gemische vereinfacht.

Da die auf dem LED Chip aufgebrachte erfindungsgemäße Leuchtstoffschicht vorzugsweise aus einem Gemisch von Silikon und homogenen Leuchtstoffpartikeln besteht, welches im Volumenguss aufgebracht wird, und das Silikon eine Oberflächenspannung aufweist, ist diese Leuchtstoffschicht auf mikroskopischer Ebene nicht einheitlich bzw. ist die Dicke der Schicht nicht durchweg konstant. Dies ist in der Regel auch der Fall wenn der Leuchtstoff nicht nach dem Volumengussverfahren, sondern im sogenannten Chip-Level-Konversionsverfahren, bei dem eine hochkonzentrierte, dünne Leuchtstoffschicht mit Hilfe von elektrostatischen Methoden direkt auf die Oberfläche des Chips appliziert wird, aufgebracht wird.

Mit Hilfe des o.g. Verfahren können beliebige äußere Formen der Leuchtstoffpartikel hergestellt werden, wie sphärische Partikel, Plättchen und strukturierte Materialien und Keramiken.

Die Herstellung von plättchenförmigen Leuchtstoffen als weitere bevorzugte Ausführungsform geschieht nach herkömmlichen Verfahren aus den entsprechenden Metall- und/oder Seltenerd-Salzen. Das Herstellverfahren ist in EP 763573 und DE 102006054331.9 ausführlich beschrieben, welche voll umfänglich in den Kontext der vorliegenden Anmeldung durch Bezugnahme eingefügt werden. Diese plättchenförmigen Leuchtstoffe können hergestellt werden, indem ein natürlicher oder synthetisch hergestellter hoch stabiler Träger bzw. ein Substrat aus beispielsweise Glimmer-, SiO₂-, Al₂O₃-, ZrO₂, Glas- oder TiO₂-Plättchen welches ein sehr großes Aspektverhältnis aufweist, eine atomar glatte Oberfläche und eine einstellbare Dicke besitzt, durch Fällungsreaktion in wässriger Dispersion oder Suspension mit einer Leuchtstoffschicht beschichtet werden kann. Neben Glimmer, ZrO₂, SiO₂ Al₂O₃, Glas oder TiO₂ oder Gemischen derselben können die Plättchen auch aus dem Leuchtstoffmaterial selbst bestehen, oder aus einem Material aufgebaut sein. Falls das Plättchen selbst lediglich als Träger für die Leuchtstoffbeschichtung dient, muss diese aus einem Material bestehen, welches transparent für die Primärstrahlung der LED ist, oder die Primärstrahlung absorbiert und diese Energie auf die Leuchtstoffschicht überträgt. Die plättchenförmigen Leuchtstoffe werden in einem Harz (z.B. Silikon- oder Epoxidharz), dispergiert und diese Dispersion wird auf dem LED Chip aufgebracht.
Die plättchenförmigen Leuchtstoffe können in Dicken von 50 nm bis zu etwa 20 µm, vorzugsweise zwischen 150 nm und 5 µm, grosstechnisch hergestellt werden. Der Durchmesser beträgt dabei von 50 nm bis 20 µm. Er besitzt in der Regel ein Aspektverhältnis (Verhältnis des Durchmessers zur Teilchendicke) von 1 : 1 bis 400 : 1, und insbesondere 3 : 1 bis 100 : 1.
Die Plättchenausdehnung (Länge x Breite) ist von der Anordnung abhängig. Plättchen eignen sich auch als Streuzentren innerhalb der Konversionsschicht, insbesondere dann, wenn sie besonders kleine Abmessungen aufweisen.
Die dem LED Chip zugewandte Oberfläche des erfindungsgemäßen plättchenförmigen Leuchtstoffes kann mit einer Beschichtung versehen werden, welche entspiegelnd in Bezug auf die von dem LED Chip emittierte Primärstrahlung wirkt. Dies führt zu einer Verringerung der Rückstreuung der Primärstrahlung, wodurch diese besser in den erfindungsgemäßen Leuchtstoffkörper eingekoppelt werden kann.
Hierfür eignen sich beispielsweise brechzahlangepasste Beschichtungen, die eine folgende Dicke d aufweisen müssen: d = [Wellenlänge der Primärstrahlung des LED Chips /(4* Brechzahl der Leuchtstoffkeramik)], s. beispielsweise Gerthsen, Physik, Springer Verlag, 18. Auflage, 1995. Diese Beschichtung kann auch aus photonischen Kristallen bestehen. Wobei hierunter auch eine Strukturierung der Oberfläche des plättchenförmigen Leuchtstoffes fällt, um bestimmte Funktionalitäten zu erreichen.

Die Herstellung der erfindungsgemäßen Leuchtstoffe in Form von keramischen Körpern erfolgt analog nach dem in der DE 102006037730 (Merck) beschrieben Verfahren, die voll umfänglich in den Kontext der vorliegenden Anmeldung durch Bezugnahme eingefügt wird. Dabei wird der Leuchtstoff durch Mischen der entsprechenden Edukte und Dotierstoffe nasschemisch hergestellt, anschließend isostatisch verpresst und in Form eines homogenen dünnen und nicht porösen Plättchens direkt auf die Oberfläche des Chips aufgebracht. Somit findet keine ortsabhängige Variation der Anregung und Emission des Leuchtstoffes statt, wodurch die damit ausgerüstete LED einen homogenen und farbkonstanten Lichtkegel emittiert und über eine hohe Lichtleistung verfügt. Die keramischen Leuchtstoffkörper können z.B. als Plättchen in Dicken von einigen 100 nm bis zu etwa 500 µm großtechnisch hergestellt werden. Die Plättchenausdehnung (Länge x Breite) ist von der Anordnung abhängig. Bei direkter Aufbringung auf den Chip ist die Größe des Plättchens gemäß der Chipausdehnung (von ca. 100 µm * 100 µm bis zu mehreren mm²) mit einem gewissen Übermaß von ca. 10% - zu 30% der Chipoberfläche bei geeigneter Chipanordnung (z.B. Flip-Chip-Anordnung) oder entsprechend zu wählen. Wird das Leuchtstoffplättchen über einer fertigen LED angebracht, so ist der austretende Lichtkegel vollständig vom Plättchen zu erfassen.

Die Seitenflächen des keramischen Leuchtstoffkörpers können mit einem Leicht- oder Edelmetall, vorzugsweise Aluminium oder Silber verspiegelt werden. Die Verspiegelung bewirkt, dass kein Licht lateral aus dem Leuchtstoffkörper austritt. Lateral austretendes Licht kann den aus der LED auszukoppelnden Lichtstrom verringern. Die Verspiegelung des keramischen Leuchtstoffkörpers erfolgt in einem Prozessschritt nach der isostatischen Verpressung zu Stangen oder Plättchen, wobei vor der Verspiegelung eventuell ein Schneider der Stangen oder Plättchen in die erforderliche Größe erfolgen kann. Die Seitenflächen werden hierzu z.B. mit einer Lösung aus Silbernitrat und Glucose benetzt und anschließend bei erhöhter Temperatur einer Ammoniak-Atmosphäre ausgesetzt. Hierbei bildet sich z.B. ein silberner Belag auf den Seitenflächen aus.
Alternativ bieten sich auch stromlose Metallisierungsverfahren an, siehe beispielsweise Hollemann-Wiberg, Lehrbuch der Anorganischen Chemie, Walter de Gruyter Verlag oder Ullmanns Enzyklopädie der chemischen Technologie.
Der keramische Leuchtstoffkörper kann, falls erforderlich, mit einer Wasserglaslösung auf dem Untergrund eines LED Chip fixiert werden.

In einer weiteren Ausführungsform besitzt der keramische Leuchtstoffkörper auf der, einem LED Chip entgegengesetzten Seite eine strukturierte (z.B. pyramidale) Oberfläche. Somit kann möglichst viel Licht aus dem Leuchtstoffkörper ausgekoppelt werden. Die strukturierte Oberfläche auf dem Leuchtstoffkörper wird dadurch hergestellt, in dem beim isostatischen Verpressen das Presswerkzeug eine strukturierte Pressplatte aufweist und dadurch eine Struktur in die Oberfläche prägt. Strukturierte Oberflächen sind dann gewünscht, wenn möglichst dünne Leuchtstoffkörper bzw. Plättchen hergestellt werden sollen. Die Pressbedingungen sind dem Fachmann bekannt (siehe J. Kriegsmann, Technische keramische Werkstoffe, Kap. 4, Deutscher Wirtschaftsdienst, 1998). Wichtig ist, dass als Presstemperaturen 2/3 bis zu 5/6 der Schmelztemperatur des zu verpressenden Stoffes verwendet werden.

Die Anregbarkeit der erfindungsgemäßen Leuchtstoffe erstrecken sich zudem über einen weiten Bereich, der von etwa 410 nm bis 530 nm, bevorzugt 430 nm bis zu etwa 500 nm reicht. Damit sind diese Leuchtstoffe nicht nur zur Anregung durch UV oder blau emittierende Primärlichtquellen wie LEDs oder konventionelle Entladungslampen (z.B. auf Hg-Basis) geeignet, sondern auch für Lichtquellen wie solche, welche die blaue In³⁺ - Linie bei 451 nm ausnutzen.

Ein weiterer Gegenstand der vorliegenden Erfindung ist eine Lichtquelle mit mindestens einer Primärlichtquelle, dadurch gekennzeichnet, dass die Lichtquelle mindestens einen Leuchtstoff nach Formel I und mindestens einen rot emittierenden Leuchtstoff, der ausgewählt ist aus Eu- und/oder Ce-dotierten Nitriden oder Oxynitriden, enthält. Vorzugsweise ist diese Beleuchtungseinheit weiß emittierend oder emittiert Licht mit einem bestimmten Farbpunkt (Color-on-demand-Prinzip).

In einer bevorzugten Ausführungsform der erfindungsgemäßen Lichtquelle handelt es sich bei der Primärlichtquelle um ein lumineszentes IndiumAluminiumGalliumNitrid, insbesondere der Formel InᵢGaⱼAlₖN, wobei 0 ≤ i, 0 ≤ j, 0 ≤ k, und i+j+k=1 ist.

In einer weiteren bevorzugten Ausführungsform der erfindungsgemäßen Lichtquelle handelt es sich bei der Primärlichtquelle um eine lumineszente auf ZnO, TCO (Transparent conducting oxide), ZnSe oder SiC basierende Anordnung oder auch um eine auf einer organischen lichtemittierende Schicht basierende Anordnung (OLED).

In einer weiteren bevorzugten Ausführungsform der erfindungsgemäßen Lichtquelle handelt es sich bei der Primärlichtquelle um eine Quelle, die Elektrolumineszenz und/oder Photolumineszenz zeigt. Weiterhin kann es sich bei der Primärlichtquelle auch um eine Plasma- oder Entladungsquelle handeln.

Dem Fachmann sind mögliche Formen von derartigen Lichtquellen bekannt. Es kann sich hierbei um lichtemittierende LED-Chips unterschiedlichen Aufbaus handeln.

Die erfindungsgemäßen Leuchtstoffe können entweder in einem Harz dispergiert (z.B. Epoxy- oder Siliconharz), oder bei geeigneten Größenverhältnissen direkt auf der Primärlichtquelle angeordnet werden oder aber von dieser, je nach Anwendung, entfernt angeordnet sein (letztere Anordnung schließt auch die "Remote phosphor Technologie" mit ein). Die Vorteile der "Remote phosphor Technologie" sind dem Fachmann bekannt und z.B. der folgenden Publikation zu entnehmen: Japanese Journ. of Appl. Phys. Vol. 44, No. 21 (2005). L649-L651.

In erfindungsgemäß bevorzugten Lichtquellen sind die Leuchtstoffe so auf der Primärlichtquelle angeordnet, dass der rot emitterende Leuchtstoff im wesentlichen von Licht der Primärlichtquelle angestrahlt wird, während der Leuchtstoff gemäß Formel I im wesentlichen von Licht angestrahlt wird, welches bereits den rot emittierenden Leuchtstoff passiert hat bzw. von diesem gestreut wurde. In einer bevorzugten Ausführungsform wird dies realisiert, indem der rot emittierende Leuchtstoff zwischen Primärlichtquelle und dem Leuchtstoff gemäß Formel I angebracht ist.

Weitere Erfindungsgegenstände sind eine Beleuchtungseinheit, insbesondere zur Hintergrundbeleuchtung von Anzeigevorrichtungen, die dadurch gekennzeichnet ist, dass sie mindestens eine oben beschriebene Lichtquelle enthält und entsprechende Anzeigevorrichtungen, insbesondere Flüssigkristallanzeigevorrichtung (LC Display), mit einer Hintergrundbeleuchtung, die dadurch gekennzeichnet sind, dass sie mindestens eine solche Beleuchtungseinheit enthalten.

In einer weiteren Ausführungsform ist es bevorzugt, wenn die optische Ankopplung der Beleuchtungseinheit zwischen dem Leuchtstoff und der Primärlichtquelle durch eine lichtleitende Anordnung realisiert wird. Dadurch ist es möglich, dass an einem zentralen Ort die Primärlichtquelle installiert wird und diese mittels lichtleitender Vorrichtungen, wie beispielsweise lichtleitenden Fasern, an den Leuchtstoff optisch angekoppelt ist. Auf diese Weise lassen sich den Beleuchtungswünschen angepasste Leuchten lediglich bestehend aus einem oder unterschiedlichen Leuchtstoffen, die zu einem Leuchtschirm angeordnet sein können, und einem Lichtleiter, der an die Primärlichtquelle angekoppelt ist, realisieren. Auf diese Weise ist es möglich, eine starke Primärlichtquelle an einen für die elektrische Installation günstigen Ort zu platzieren und ohne weitere elektrische Verkabelung, sondern nur durch Verlegen von Lichtleitern an beliebigen Orten Leuchten aus Leuchtstoffen, welche an die Lichtleiter gekoppelt sind, zu installieren.

Ein weiterer Gegenstand der vorliegenden Erfindung ist die Verwendung der erfindungsgemäßen Leuchtstoffe zur teilweisen oder vollständigen Konversion der blauen oder im nahen UV-liegenden Emission einer Lumineszenzdiode.

Weiterhin bevorzugt ist die Verwendung der erfindungsgemäßen Leuchtstoffe zur Konversion der blauen oder im nahen UV-liegenden Emission in sichtbare weiße Strahlung. Weiterhin ist die Verwendung der erfindungsgemäßen Leuchtstoffe zur Konversion der Primärstrahlung in einen bestimmten Farbpunkt nach dem "Color on demand"-Konzept bevorzugt.

Ein weiterer Gegenstand der vorliegenden Erfindung ist die Verwendung der erfindungsgemäßen Leuchtstoffe in Elektrolumineszenz-Materialien, wie beispielsweise Elektrolumineszenz-Folien (auch Leuchtfolien oder Lichtfolien genannt), in denen beispielsweise Zinksulfid oder Zinksulfid dotiert mit Mn²⁺, Cu⁺, oder Ag⁺ als Emitter eingesetzt wird, die im gelbgrünen Bereich emittieren. Die Anwendungsbereiche der Elektrolumineszenz-Folie sind z.B. Werbung, Displayhinter-grundbeleuchtung in Flüssigkristallbildschirmen (LC-Displays) und Dünnschichttransistor-Displays (TFT-Displays), selbstleuchtende KFZ-Kennzeichenschilder, Bodengrafik (in Verbindung mit einem tritt- und rutschfesten Laminat), in Anzeigen- und/oder Bedienelementen beispielsweise in Automobilen, Zügen, Schiffen und Flugzeugen oder auch Haushalts-, Garten-, Mess- oder Sport- und Freizeitgeräten.

Die folgenden Beispiele sollen die vorliegende Erfindung verdeutlichen. Sie sind jedoch keinesfalls als limitierend zu betrachten. Alle Verbindungen oder Komponenten, die in den Zubereitungen verwendet werden können, sind entweder bekannt und käuflich erhältlich oder können nach bekannten Methoden synthetisiert werden. Die in den Beispielen angegebenen Temperaturen gelten immer in °C. Es versteht sich weiterhin von selbst, dass sich sowohl in der Beschreibung als auch in den Beispielen die zugegebenen Mengen der Komponenten in den Zusammensetzungen immer zu insgesamt 100% addieren. Gegebene Prozentangaben sind immer im gegebenen Zusammenhang zu sehen. Sie beziehen sich üblicherweise aber immer auf die Masse der angegebenen Teil- oder Gesamtmenge.

Auch ohne weitere Ausführungen wird davon ausgegangen, dass ein Fachmann die obige Beschreibung in weitestem Umfang nutzen kann. Die bevorzugten Ausführungsformen sind deswegen lediglich als beschreibende, keinesfalls als in irgendeiner Weise limitierende Offenbarung aufzufassen. Die vollständige Offenbarung aller vor- und nachstehend aufgeführten Anmeldungen und Veröffentlichungen sind durch Bezugnahme in diese Anmeldung eingeführt. Die folgenden Beispiele sollen die vorliegende Erfindung verdeutlichen. Sie sind jedoch keinesfalls als limitierend zu betrachten. Alle Verbindungen oder Komponenten, die in den Zubereitungen verwendet werden können, sind entweder bekannt und käuflich erhältlich oder können nach bekannten Methoden synthetisiert werden.

### Beispiele

### Beispiel 1: Herstellung des Granat-Leuchtstoffes

### Beispiel 1A: Herstellung des Leuchtstoffes Lu_{2,91}Al₄GaO₁₂:Ce_{0,09} ("LuGaAG")

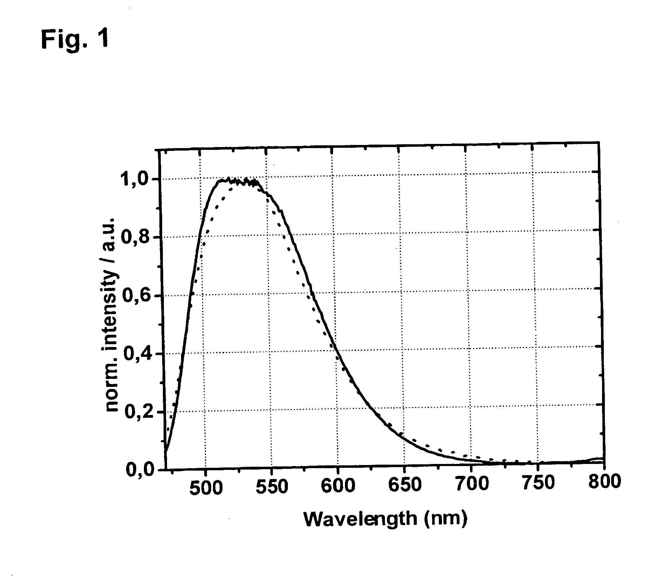

387 g Ammoniumhydrogencarbonat werden innerhalb von 1 h in 4,3 Litern VE-Wasser gelöst. In 2,71 VE-Wasser werden 118 g AluminiumchloridHexahydrat, 139 g Lutetiumchlorid-Hexahydrat, 3,4g Cerchlorid Heptahydrat und 43,8 g Galliumnitrat gelöst und innerhalb von 0,75h zur Hydrogencarbonatlösung zugetropft. Die Hydrogencarbonatlösung wird auf pH 8 eingestellt. Der anfallende Niederschlag wird abgesaugt und gewaschen. Danach wird er getrocknet und in einen Ofen überführt. Der Niederschlag wird 3 Stunden bei 1100°C an Luft vorkalziniert und anschließend 6 Stunden bei 1700 °C reduktiv kalziniert. Das Emissionsspektrum der Verbindung ist in Figur 1 angegeben.

Analog werden durch geeignete Modifikation der Eduktverhältnisse bzw. durch Verwendung des zusätzlichen Eduktes Yttriumchlorid-Hexahydrat folgende Verbindungen erhalten:
Lu_{2,91}Al₄GaO₁₂:Ce_{0,09}
Lu_{2,95}Al₄GaO₁₂:Ce_{0,05}
Lu_{2,91}Al₂Ga₃O₁₂:Ce_{0,09}
Y_{0,3}Lu_{2,61}Al₄GaO₁₂:Ce_{0,09}
Y_{0,3}Lu_{2,61}Al_{4,5}Ga_{0,5}O₁₂:Ce_{0,09}

**Beispiel 1B: Herstellung des Leuchtstoffes Lu_{2,97}Al₅O₁₂:Ce_{0,03} ("LuAG")**

387 g Ammoniumhydrogencarbonat werden innerhalb von 1h in 4,3 Litern VE-Wasser gelöst. In 2,71 VE-Wasser werden 148 g AluminiumchloridHexahydrat, 135 g Lutetiumchlorid-Hexahydrat, und 0,86 g Cerchlorid Heptahydrat gelöst und innerhalb von 0,75h zur Hydrogencarbonatlösung zugetropft. Die Hydrogencarbonatlösung wird auf pH 8 eingestellt. Der anfallende Niederschlag wird abgesaugt und gewaschen. Danach wird er getrocknet und in einen Ofen überführt.
Der Niederschlag wird 3 Stunden bei 1100°C an Luft vorkalziniert und anschließend 6 Stunden bei 1700 °C reduktiv kalziniert. Das Emissionsspektrum der Verbindung ist in Figur 1 angegeben.

### Beispiel 2: Herstellung der nitridischen Leuchtstoffe

### Beispiel 2A: Herstellung von Sr₂Si₅N₇,₆₆₆O_{0,5}:Eu

18,9 g Sr₃N₂, 0,996 g EuN, 22,66 g Siliciumnitrid und 1,504 g Siliciumdioxid werden in einer mit Stickstoff gefüllten Glovebox eingewogen und vermischt. Das entstandene Gemisch wird in einen Bornitridtiegel gefüllt und in einen Rohrofen überführt. Anschließend wird das Gemisch 8 Stunden bei 1600 °C unter einer Sickstoff/Wasserstoffatmosphäre kalziniert. Nach Abkühlung wird der Rohleuchtstoff entnommen, kurz gemörsert und erneut in einen Molybdäntiegel gefüllt, der dann in einen Hochdruckofen überführt wird. In diesem wird der Leuchtstoff erneut 8 Stunden bei 1600 °C unter einem Stickstoffdruck von 65 bar kalziniert. Nach Abkühlung wird der Leuchtstoff entnommen und in 100 ml VE-Wasser suspendiert. Die entstehende Suspension wird 30 Minuten gerührt, anschließend wird der Rührer ausgeschaltet. Nach einigen Minuten wird der Überstand abgegossen, der verbleibende Rückstand wird erneut in VE-Wasser aufgenommen, abgenutscht, mit VE-Wasser neutral gewaschen und getrocknet.

### Beispiel 2B: Herstellung von Sr_{1,6}Ca_{0,4}Si₅N_{7,666}O_{0,5}:Eu

19,0 g g Sr₃N₂, 2,47 g Ca₃N₂, 0,83 g EuN, 28,33 g Siliciumnitrid und 1,88 g Siliciumdioxid werden in einer mit Stickstoff gefüllten Glovebox eingewogen und vermischt. Das entstandene Gemisch wird in einen Bornitridtiegel gefüllt und in einen Rohrofen überführt. Anschließend wird das Gemisch 8 Stunden bei 1600 °C unter einer Sickstoff/Wasserstoffatmosphäre kalziniert. Nach Abkühlung wird der Rohleuchtstoff entnommen, kurz gemörsert und erneut in einen Molybdäntiegel gefüllt, der dann in einen Hochdruckofen überführt wird. In diesem wird der Leuchtstoff erneut 8 Stunden bei 1600 °C unter einem Stickstoffdruck von 65 bar kalziniert. Nach Abkühlung wird der Leuchtstoff entnommen und in 100 ml VE-Wasser suspendiert. Die enstehende Suspension wird 30 Minuten gerührt, anschließend wird der Rührer ausgeschaltet. Nach einigen Minuten wird der Überstand abgegossen, der verbleibende Rückstand wird erneut in VE-Wasser aufgenommen, abgenutscht, mit VE-Wasser neutral gewaschen und getrocknet.

### Beispiel 2C: Herstellung von Ba₂Si₅N_{7,666}O_{0,5}:Eu

14,446 g Ba₃N₂, 0,332 g EuN, 11,33 g Siliciumnitrid und 0,433 g Siliciumdioxid werden in einer mit Stickstoff gefüllten Glovebox eingewogen und vermischt. Das entstandene Gemisch wird in einen Bornitridtiegel gefüllt und in einen Rohrofen überführt. Anschließend wird das Gemisch 8 Stunden bei 1600 °C unter einer Sickstoff/Wasserstoffatmosphäre kalziniert. Nach Abkühlung wird der Rohleuchtstoff entnommen, kurz gemörsert und erneut in einen Molybdäntiegel gefüllt, der dann in einen Hochdruckofen überführt wird. In diesem wird der Leuchtstoff erneut 8 Stunden bei 1600 °C unter einem Stickstoffdruck von 65 bar kalziniert. Nach Abkühlung wird der Leuchtstoff entnommen und in 100 ml VE-Wasser suspendiert. Die enstehende Suspension wird 30 Minuten gerührt, anschließend wird der Rührer ausgeschaltet. Nach einigen Minuten wird der Überstand abgegossen, der verbleibende Rückstand wird erneut in VE-Wasser aufgenommen, abgenutscht, mit VE-Wasser neutral gewaschen und getrocknet.

### Beispiel 2D: Herstellung des Leuchtstoffs Sr₂Si₅N₈:Eu

1,84 g Sr₃N₂, 0,166 g EuN und 2,33 g Siliciumnitrid werden in einer mit Stickstoff gefüllten Glovebox eingewogen und vermischt. Das entstandene Gemisch wird in einen Bornitridtiegel gefüllt und in einen Rohrofen überführt. Anschließend wird das Gemisch 8 Stunden bei 1600 °C unter einer Sickstoff/Wasserstoffatmosphäre kalziniert. Nach Abkühlung wird der Rohleuchtstoff entnommen, kurz gemörsert und erneut in einen Molybdäntiegel gefüllt, der dann in einen Hochdruckofen überführt wird. In diesem wird der Leuchtstoff erneut 8 Stunden bei 1600 °C unter einem Stickstoffdruck von 65 bar kalziniert.
Nach Abkühlung wird der Leuchtstoff entnommen und in 100 ml VE-Wasser suspendiert. Die entstehende Suspension wird 30 Minuten gerührt, anschließend wird der Rührer ausgeschaltet. Nach einigen Minuten wird der Überstand abgegossen, der verbleibende Rückstand wird erneut in VE-Wasser aufgenommen, abgenutscht, mit VE-Wasser neutral gewaschen und getrocknet.

### Beispiel 2E: Herstellung des Leuchtstoffs (Sr,Ca)AlSiN₃:Eu

2,22 g Sr₃N₂, 0,33g Ca₃N₂, 0,05 g EuN, 1,23 g AIN und 1,4 g Siliciumnitrid werden in einer mit Stickstoff gefüllten Glovebox eingewogen und vermischt. Das entstandene Gemisch wird in einen Bornitridtiegel gefüllt und in eine heißisostatische Presse (HIP) überführt. Es wurde ein Stickstoffdruck von 500 bar eingestellt, anschließend wurde das Material auf 1700 °C erhitzt und 4 Stunden bei dieser Temperatur getempert, hierbei stieg der Druck auf 1740 bar. Nach Abkühlung und Ventilation wurde das Material entnommen und in 100 ml VE-Wasser suspendiert. Die entstehende Suspension wird 30 Minuten gerührt, anschließend wird der Rührer ausgeschaltet. Nach einigen Minuten wird der Überstand abgegossen, der verbleibende Rückstand wird erneut in VE-Wasser aufgenommen, abgenutscht, mit VE-Wasser neutral gewaschen und getrocknet.

### Beispiel 3: Herstellung der Leuchtstoffmischungen

### Beispiel 3.1: "LuAG - Nitrid"

10 g des Leuchtstoffes aus Beispiel 1 B werden mit 1 g des Leuchtstoffes aus Beispiel 2D innig vermischt.

Analog wird einen Mischung enthaltend die Leuchtstoffe aus Beispiel 1 B und 2A bzw. 1B und 2B bzw. 1B und 2C bzw. 1B und 2E. hergestellt.

### Beispiel 3.2: "LuGaAG - Nitrid"

6 g des LuGaAG Leuchtstoffes aus Beispiel 1A werden mit 1 g des Leuchstoffes aus Beispiel 2A innig vermischt.

Analog wird eine Mischung enthaltend die Leuchtstoffe aus Beispiel 1A und 2B bzw. 1A und 2C bzw. 1A und 2D bzw. 1A und 2E. hergestellt..

### Beispiel 4: Herstellung einer Leuchtdiode ("LuAG-Nitrid")

Die Leuchtstoffmischung aus Beispiel 3.1 wird in einem Taumelmischer mit einem 2-Komponenten Silikon (OE 6550 der Fa. Dow Corning) gemischt, so dass gleiche Mengen der Leuchtstoffmischung in den beiden Komponenten des Silikons dispergiert sind; die Gesamtkonzentration der Leuchtstoffmischung im Silikon beträgt 8 Gew.-%.

5 ml jeder der beiden Leuchtstoff enthaltenden Silikon Komponenten werden homogen miteinander gemischt und in einen Dispenser überführt. Mit Hilfe des Dispensers werden leere LED packages von der Fa. OSA optoelectronics, Berlin, welche einen 100 µm2 großen GaN Chip enthalten, befüllt. Danach werden die LEDs in eine Wärmekammer gestellt, um über 1 h bei 150°C das Silikon zu verfestigen.

### Beispiel 5: Herstellung einer Leuchtdiode ("LuGaAG-Nitrid")

Der Leuchtstoffmischung aus Beispiel 3.2 wird in einem Taumelmischer mit einem 2-Komponenten Silikon (OE 6550 der Fa. Dow Corning) gemischt, so dass gleiche Mengen der Leuchtstoffmischung in den beiden Komponenten des Silikons dispergiert sind; die Gesamtkonzentration der Leuchtstoffmischung im Silikon beträgt 5 Gew.-%.

5 ml jeder der beiden Leuchtstoff enthaltenden Silikon Komponenten werden homogen miteinander gemischt und in einen Dispenser überführt. Mit Hilfe des Dispensers werden leere LED packages von der Fa. OSA optoelectronics, Berlin, welche einen 100 µm2 großen GaN Chip enthalten, befüllt. Danach werden die LEDs in eine Wärmekammer gestellt, um über 1 h bei 150°C das Silikon zu verfestigen.

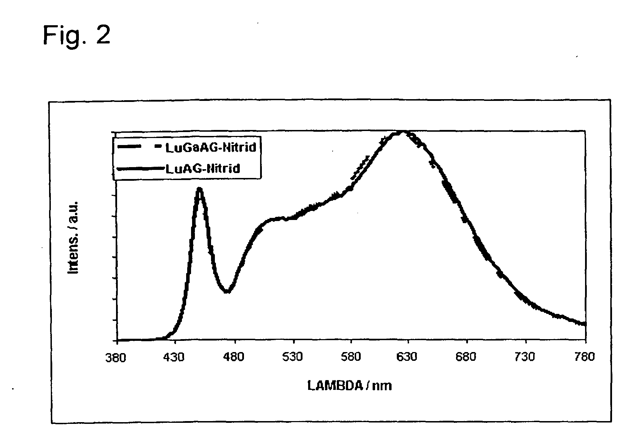

Die Emissionsspektren der beiden LEDs nach Beispiel 4 und 5 sind in Figur 2 angegeben. Beiden LEDs weisen annähernd identische Kennwerte auf:

| | CRI | CCT | Lumenäquivalent | Lumen | CIE x | CIE y |
|---|---|---|---|---|---|---|
| Bsp. 5 | 96,0 | 3145,0 | 279,23 | 3,63 | 0,4259 | 0,3979 |
| Bsp. 4 | 97,0 | 3262,0 | 270,77 | 3,52 | 0,4179 | 0,3937 |

"CRI" steht für den sog. "Color Rendering Index", dies ist eine dem Fachmann geläufige, einheitslose lichttechnische Größe, welche die Farbwiedergabetreue einer künstlichen Lichtquelle mit derjenigen des Sonnenlichtes bzw. und Filamentlichtquellen vergleicht (die beiden letztgenannten besitzen einen CRI von 100).

"CCT" steht für die sog. "Correlated Color Temperature", dies ist eine dem Fachmann geläufige, lichttechnische Größe mit der Einheit Kelvin. Je höher der Zahlenwert, desto kälter erscheint dem Betrachter das Weißlicht einer künstlichen Strahlungsquelle. Die CCT folgt dem Konzept des Schwarzlichtstrahlers, dessen Farbtemperatur der sog. Planckschen Kurve im CIE Diagramm verläuft.

Das Lumenäquivalent ist eine dem Fachmann geläufige lichttechnische Größe mit der Einheit Im/W, die beschreibt, wie groß der photometrische Lichtstrom in Lumen einer Lichtquelle bei einer bestimmten radiometrischen Strahlungsleistung mit der Einheit Watt, ist. Je höher das Lumenäquivalent ist, desto effizienter ist eine Lichtquelle.

Das Lumen ist eine dem Fachmann geläufige, photometrische lichttechnische Größe, welche den Lichtstrom einer Lichtquelle, der ein Maß für die gesamte von einer Strahlungsquelle ausgesandte sichtbare Strahlung ist, beschreibt. Je größer der Lichtstrom, desto heller erscheint die Lichtquelle dem Beobachter.

CIE x und CIE y stehen für die Koordinaten im dem dem Fachmann geläufigen CIE Normfarbdiagramm (hier Normalbeobachter 1931), mit denen die Farbe einer Lichtquelle beschrieben wird.
Alle oben aufgeführten Größen werden nach dem Fachmann geläufigen Methoden aus Emissionsspektren der Lichtquelle berechnet.

Die Zusammensetzung der Leuchtstoffmischung in der LED "LuAG-Nitrid" beträgt 10 Massenanteile LuAG LGA 553 100 : 1 Massenanteil Nitrid. Die Konzentration der Leuchtstoffmischung in der LED beträgt 8 wt-% (im Silikon). Die Zusammensetzung der Leuchtstoffmischung in der LED "LuGaAG-Nitrid" beträgt 6 Massenanteile LuGaAG : 1 Massenanteil Nitrid. Die Konzentration der Leuchtstoffmischung in der LED beträgt 5 wt-% (im Silikon). D.h. trotz geringerer Leuchtstoffeinsatzkonzentration (hier: LuGaAG Konzentration) werden nahezu identische LED Kennwerte erhalten.

### Beispiel 6: Herstellung einer Leuchtdiode in welcher die Leuchtstoffe so auf der Primärlichtquelle angeordnet sind, dass der rot emittierende Leuchtstoff im wesentlichen von Licht der Primärlichtquelle angestrahlt wird, während der grün emittierende Leuchtstoff im wesentlichen von Licht angestrahlt wird, welches bereits den rot emittierenden Leuchtstoff passiert hat bzw. von diesem gestreut wurde

Der Leuchtstoff aus Beispiel 1A bzw. der Leuchtstoff aus Beispiel 1 B wird in einem Taumelmischer mit einem 2-Komponenten Silikon (OE 6550 der Fa. Dow Corning) gemischt, so dass gleiche Mengen der Leuchtstoffmischung in den beiden Komponenten des Silikons dispergiert sind. Die Konzentration des grünen Leuchtstoffes im Silikon beträgt 5 Gew.-% LuGaAG (Pre-Mix A1) bzw. 8 Gew.-% LuAG (Pre-Mix A2).

Der rot emittierende aus Beispiel 2A bzw. 2B bzw. 2C wird jeweils in einem Taumelmischer mit einem 2-Komponenten Silikon (OE 6550 der Fa. Dow Corning) gemischt, so dass gleiche Mengen der Leuchtstoffmischung in den beiden Komponenten des Silikons dispergiert sind. Die Konzentration des roten Leuchtstoffes im Silikon beträgt 1 Gew.-% (Pre-Mix B1 - Pre-Mix B3).

5 ml jeder der beiden Leuchtstoff enthaltenden Silikon Komponenten eines pre-Mixes werden homogen miteinander gemischt und in einen Dispenser überführt. Mit Hilfe des Dispensers werden leere LED packages von der Fa. OSA optoelectronics, Berlin, welche einen 100 µm² großen GaN Chip enthalten, befüllt. Zuerst wird der Pre-Mix B eingefüllt, anschließend die LEDs in eine Wärmekammer gestellt, um über 1 h bei 150°C das Silikon zu verfestigen. Danach wird Pre-Mix A (A1 bzw. A2) eingefüllt und die LEDs erneut in eine Wärmekammer gestellt, um über 1 h bei 150°C das Silikon zu verfestigen.

### Beschreibung der Figuren

**Fig. 1****:** Die Emissionsspektren eines niedrig dotierten LuAG aus Beispiel 2 (durchgezogene Linie, Peak bei 525 nm) und die Emissionskurve eines hoch dotierten LuGaAG aus Beispiel 1 weisen annähernd identische Farbeigenschaften auf. (Die Emissionsmessung wurde an einer optisch unendlich dicken Schicht des Leuchtstoffes bei einer Anregung von 450 nm mit einem Edinburgh Instruments Spektrometer OC290 bei Raumtemperatur durchgeführt.)
**Fig. 2****:** Emissionsspektren der Leuchtdioden aus Beispiel 4 und 5 Die durchgezogene Linie repräsentiert die LED aus Vergleichsbeispiel 4 (Massenanteile LuAG : Nitrid = 10:1). Die gestrichelte Linie repräsentiert eine LED gemäß Beispiel 5, welche mit der Leuchtstoffmischung, bestehend aus LuGaAG:Ce und einem bei 638 nm emittierenden 2-5-8-Nitrid gebaut worden ist (Massenanteile LuGaAG : Nitrid = 6:1). (Die Emissionsmessung wurde mit einem Instrument Systems CAS 140 Spektrometer in einer Integrationskugel der Fa. Instrument Systems ISP 250 mit Hilfe der Stromquelle der Fa. Keithley, Modell 2601 durchgeführt. Die LED wurde kontinuierlich mit 20 mA bei Raumtemperatur stabilisiert angesteuert.)

## Patentansprüche

1. Mischung enthaltend mindestens einen Leuchtstoff der Formel I,
Aₐ Lu_{c},CeₓAlₗ,GaₘO₁₂ (I)
wobei
A steht für ein oder mehrere Elemente ausgewählt aus Y, Gd, Se, Sm, Tb, Pr, Th, Ir, Sb,Bi und
a steht für einen Wert aus dem Bereich von 0 bis 2,895 und
c steht für einen Wert aus dem Bereich von 0,1 bis 2,995 und
x steht für einen Wert aus dem Bereich von 0,005 bis 1 und
wobei a, c und x so gewählt sind, dass gilt a + c + x = 3 und
I steht für einen Wert aus dem Bereich von 0 bis 4,99 und
m steht für einen Wert aus dem Bereich von 0,01 bis 5, wobei I und m so gewählt sind, dass gilt I + m = 5 und
und mindestens einen rot emittierenden Leuchtstoff, **dadurch gekennzeichnet, dass** der rot emittierende Leuchtstoff ausgewählt ist aus Eu- und/oder Ce-dotierten Nitriden oder Oxynitriden.

2. Mischung nach Anspruch 1, **dadurch gekennzeichnet dass** die Mischung mindestens einen Leuchtstoff der Formel I enthält, der **dadurch gekennzeichnet ist, dass** a für einen Wert aus dem Bereich von 0 bis 0,5 steht, vorzugsweise aus dem Bereich 0 bis 0,3 und wobei insbesondere bevorzugt gilt a = 0 bis 0,2.

3. Mischung nach einem oder mehreren der Ansprüche 1 oder 2, **dadurch gekennzeichnet dass** die Mischung mindestens einen Leuchtstoff der Formel I enthält, der **dadurch gekennzeichnet ist, dass** x für einen Wert aus dem Bereich von 0,01 bis 0,5 steht, vorzugsweise aus dem Bereich 0,015 bis 0,2 und insbesondere bevorzugt aus dem Bereich 0,02 bis 0,1.

4. Mischung nach einem oder mehreren der Ansprüche 1 bis 3, **dadurch gekennzeichnet dass** die Mischung mindestens einen Leuchtstoff der Formel I enthält, der **dadurch gekennzeichnet ist, dass** m für einen Wert aus dem Bereich von 0,05 bis 3 steht, vorzugsweise aus dem Bereich 0,1 bis 2 und insbesondere bevorzugt aus dem Bereich 0,5 bis 1,5.

5. Mischung nach einem oder mehreren der Ansprüche 1 bis 4, **dadurch gekennzeichnet, dass** mindestens ein rot emittierender Leuchtstoff ausgewählt ist aus (Ca,Sr,Ba)₂Si₅N₈:Eu, (Ca,Sr)AlSiN₃:Eu, (Ca,Sr;Ba)SiN₂:Eu, (Ca,Sr,Ba)₆Si₃O₆N₄:Eu, (Ca,Sr,Ba)_{2-x/2}Si₅N₈₋ₓOₓ:Eu, wobei x für eine Zahl aus dem Bereich 0,01 bis 3 steht, oder Varianten der genannten Verbindungen, bei denen einzelne Gitterpositionen durch andere chemische Elemente, wie Alkalimetalle, Aluminium, Gallium, oder Gadolinium, substituiert sind bzw. solche weitere Elemente als Dotierstoff Fehlstellen besetzen.

6. Mischung nach einem oder mehreren der Ansprüche 1 bis 5, **dadurch gekennzeichnet, dass** der mindestens eine Leuchtstoff der Formel I und der mindestens eine rot emittierende Leuchtstoff im Gewichtsverhältnis 20:1 bis 1:1, vorzugsweise 10:1 bis 3:1 und insbesondere bevorzugt 6:1 bis 4:1 vorliegen.

7. Verfahren zur Herstellung einer Leuchtstoffmischung gemäß einem oder mehreren der Ansprüche 1 bis 6, **dadurch gekennzeichnet, dass** mindestens ein Leuchtstoff der Formel I mit mindestens einem rot emittierenden Leuchtstoff gemischt wird.

8. Lichtquelle mit mindestens einer Primärlichtquelle, **dadurch gekennzeichnet, dass** die Lichtquelle mindestens einen Leuchtstoff nach Formel I gemäß einem oder mehreren der Ansprüche 1 bis 6 und mindestens einen rot emittierenden Leuchtstoff enthält, **dadurch gekennzeichnet, dass** der rot emittierende Leuchtstoff ausgewählt ist aus Eu- und/oder Ce-dotierten Nitriden oder Oxynitriden.

9. Lichtquelle nach Anspruch 8, **dadurch gekennzeichnet, dass** es sich bei der Primärlichtquelle um ein lumineszentes IndiumAluminiumGalliumNitrid, insbesondere der Formel InᵢGaⱼAlₖN, wobei 0 ≤ i, 0 ≤ j, 0 ≤ k, und i+j+k=1 handelt.

10. Lichtquelle nach einem oder mehreren der Ansprüche 8 oder 9, **dadurch gekennzeichnet, dass** die Leuchtstoffe so auf der Primärlichtquelle angeordnet sind, dass der rot emittierende Leuchtstoff im wesentlichen von Licht der Primärlichtquelle angestrahlt wird, während der Leuchtstoff gemäß Formel I im wesentlichen von Licht angestrahlt wird, welches bereits den rot emittierenden Leuchtstoff passiert hat bzw. von diesem gestreut wurde.

11. Lichtquelle nach Anspruch 10, **dadurch gekennzeichnet, dass** der rot emittierende Leuchtstoff zwischen Primärlichtquelle und dem Leuchtstoff gemäß Formel I angebracht ist.

12. Beleuchtungseinheit, insbesondere zur Hintergrundbeleuchtung von Anzeigevorrichtungen, **dadurch gekennzeichnet, dass** sie mindestens eine Lichtquelle nach einem oder mehreren der Ansprüche 8 bis 11 enthält.

13. Beleuchtungseinheit nach Anspruch 12, **dadurch gekennzeichnet, dass** die optische Ankopplung zwischen dem Leuchtstoff und der Primärlichtquelle durch eine lichtleitende Anordnung realisiert ist.

14. Anzeigevorrichtung, insbesondere Flüssigkristallanzeigevorrichtung (LC Display), mit einer Hintergrundbeleuchtung, **dadurch gekennzeichnet, dass** sie mindestens eine Beleuchtungseinheit gemäß Anspruch 12 oder 13 enthält.

15. Verwendung einer Mischung nach einem oder mehreren der Ansprüche 1 bis 6 als Konversions-Leuchtstoff zur teilweisen oder vollständigen Konversion der blauen oder im nahen UV-liegenden Emission einer Lumineszenzdiode.

## Claims

1. Mixture comprising at least one phosphor of the formula I,
Aₐ Lu_{c},CeₓAlₗ,GaₘO₁₂ (I)
where
A stands for one or more elements selected from Y, Gd, Se, Sm, Tb, Pr, Th, Ir, Sb, Bi, and
a stands for a value from the range from 0 to 2.895 and
c stands for a value from the range from 0.1 to 2.995 and
x stands for a value from the range from 0.005 to 1 and
where a, c and x are selected so that a + c + x = 3, and
I stands for a value from the range from 0 to 4.99 and
m stands for a value from the range from 0.01 to 5, where I and m are selected so that I + m = 5, and
at least one red-emitting phosphor, **characterised in that** the red-emitting phosphor is selected from Eu- and/or Ce-doped nitrides or oxynitrides.

2. Mixture according to Claim 1, **characterised in that** the mixture comprises at least one phosphor of the formula I which is **characterised in that** a stands for a value from the range from 0 to 0.5, preferably from the range 0 to 0.3, and where particularly preferably a = 0 to 0.2.

3. Mixture according to one or more of Claims 1 or 2, **characterised in that** the mixture comprises at least one phosphor of the formula I which is **characterised in that** x stands for a value from the range from 0.01 to 0.5, preferably from the range 0.015 to 0.2 and particularly preferably from the range 0.02 to 0.1.

4. Mixture according to one or more of Claims 1 to 3, **characterised in that** the mixture comprises at least one phosphor of the formula I which is **characterised in that** m stands for a value from the range from 0.05 to 3, preferably from the range 0.1 to 2 and particularly preferably from the range 0.5 to 1.5.

5. Mixture according to one or more of Claims 1 to 4, **characterised in that** at least one red-emitting phosphor is selected from (Ca,Sr,Ba)₂Si₅N₈:Eu, (Ca,Sr)AlSiN₃:Eu, (Ca,Sr,Ba)SiN₂:Eu, (Ca,Sr,Ba)₆Si₃O₆N₄:Eu, (Ca,Sr,Ba)_{2-x/2}Si₅N₈₋ₓOₓ:Eu, where x stands for a number from the range 0.01 to 3, or variants of the said compounds in which individual lattice positions are substituted by other chemical elements, such as alkali metals, aluminium, gallium or gadolinium, or further elements of this type occupy flaws as dopant.

6. Mixture according to one or more of Claims 1 to 5, **characterised in that** the at least one phosphor of the formula I and the at least one red-emitting phosphor are present in the weight ratio 20:1 to 1:1, preferably 10:1 to 3:1 and particularly preferably 6:1 to 4:1.

7. Process for the preparation of a phosphor mixture according to one or more of Claims 1 to 6, **characterised in that** at least one phosphor of the formula I is mixed with at least one red-emitting phosphor.

8. Light source having at least one primary light source, **characterised in that** the light source comprises at least one phosphor of the formula I according to one or more of Claims 1 to 6 and at least one red-emitting phosphor, **characterised in that** the red-emitting phosphor is selected from Eu- and/or Ce-doped nitrides or oxynitrides.

9. Light source according to Claim 8, **characterised in that** the primary light source is a luminescent indium aluminium gallium nitride, in particular of the formula lnᵢGaⱼAlₖN, where 0 ≤ i, 0 ≤ j, 0 ≤ k and i + j + k = 1.

10. Light source according to one or more of Claims 8 or 9, **characterised in that** the phosphors are arranged on the primary light source in such a way that the red-emitting phosphor is essentially irradiated by light from the primary light source, while the phosphor of the formula I is essentially irradiated by light which has already passed through the red-emitting phosphor or has been scattered thereby.

11. Light source according to Claim 10, **characterised in that** the red-emitting phosphor is installed between the primary light source and the phosphor of the formula I.

12. Lighting unit, in particular for the backlighting of display devices, **characterised in that** it comprises at least one light source according to one or more of Claims 8 to 11.

13. Lighting unit according to Claim 12, **characterised in that** the optical coupling between the phosphor and the primary light source is achieved by a light-conducting arrangement.

14. Display device, in particular liquid-crystal display device (LC display), having backlighting, **characterised in that** it comprises at least one lighting unit according to Claim 12 or 13.

15. Use of a mixture according to one or more of Claims 1 to 6 as conversion phosphor for the partial or complete conversion of the blue or near-UV emission from a luminescent diode.

## Revendications

1. Mélange comprenant au moins un phosphore de la formule I :
Aₐ Lu_{c},CeₓAlₗ,GaₘO₁₂ (I)
dans laquelle :
A représente un ou plusieurs élément(s) choisi(s) parmi Y, Gd, Se, Sm, Tb, Pr, Th, Ir, Sb, Bi, et
a représente une valeur prise dans la plage de 0 à 2,895 et
c représente une valeur prise dans la plage de 0,1 à 2,995 et
x représente une valeur prise dans la plage de 0,005 à 1 et
où a, c et x sont choisis de telle sorte que a + c + x = 3, et
l représente une valeur prise dans la plage de 0 à 4,99 et
m représente une valeur prise dans la plage de 0,01 à 5, où l et m sont choisis de telle sorte que l + m = 5, et
au moins un phosphore émetteur de rouge, **caractérisé en ce que** le phosphore émetteur de rouge est choisi parmi des nitrures ou des oxynitrures dopés au Eu et/ou au Ce.

2. Mélange selon la revendication 1, **caractérisé en ce que** le mélange comprend au moins un phosphore de la formule I, lequel est **caractérisé en ce que** a représente une valeur prise dans la plage de 0 à 0,5, de façon préférable dans la plage de 0 à 0,3, et où, de façon particulièrement préférable, a = 0 à 0,2.

3. Mélange selon une ou plusieurs des revendications 1 et 2, **caractérisé en ce que** le mélange comprend au moins un phosphore de la formule I, lequel est **caractérisé en ce que** x représente une valeur prise dans la plage de 0,01 à 0,5, de façon préférable dans la plage de 0,015 à 0,2 et de façon particulièrement préférable, dans la plage de 0,02 à 0,1.

4. Mélange selon une ou plusieurs des revendications 1 à 3, **caractérisé en ce que** le mélange comprend au moins un phosphore de la formule I, lequel est **caractérisé en ce que** m représente une valeur prise dans la plage de 0,05 à 3, de façon préférable dans la plage de 0,1 à 2 et de façon particulièrement préférable, dans la plage de 0,5 à 1,5.

5. Mélange selon une ou plusieurs des revendications 1 à 4, **caractérisé en ce qu'**au moins un phosphore émetteur de rouge est choisi parmi (Ca,Sr,Ba)₂Si₅N₈:Eu, (Ca,Sr)AlSiN₃:Eu, (Ca,Sr,Ba)SiN₂:Eu, (Ca,Sr,Ba)₆Si₃O₆N₄:Eu, (Ca,Sr,Ba)_{2-x/2}Si₅N₈₋ₓOₓ:Eu, où x représente un nombre pris dans la plage de 0,01 à 3, ou des variantes desdits composés pour lesquelles des positions de réseau cristallin individuelles sont substituées par d'autres éléments chimiques, tels que des métaux alcalins, aluminium, gallium ou gadolinium, ou d'autres éléments de ce type occupent des défauts en tant que dopant.

6. Mélange selon une ou plusieurs des revendications 1 à 5, **caractérisé en ce que** l'au moins un phosphore de la formule I et l'au moins un phosphore émetteur de rouge sont présents selon le rapport en poids de 20:1 à 1:1, de façon préférable, de 10:1 à 3:1 et de façon particulièrement préférable, de 6:1 à 4:1.

7. Procédé pour la préparation d'un mélange de phosphores selon une ou plusieurs des revendications 1 à 6, **caractérisé en ce qu'**au moins un phosphore de la formule I est mélangé avec au moins un phosphore émetteur de rouge.

8. Source de lumière comportant au moins une source de lumière primaire, **caractérisée en ce que** la source de lumière comprend au moins un phosphore de la formule I selon une ou plusieurs des revendications 1 à 6 et au moins un phosphore émetteur de rouge, **caractérisée en ce que** le phosphore émetteur de rouge est choisi parmi des nitrures ou des oxynitrures dopés au Eu et/ou au Ce.

9. Source de lumière selon la revendication 8, **caractérisée en ce que** la source de lumière primaire est un nitrure d'indium aluminium gallium luminescent, en particulier de la formule InᵢGaⱼAlₖN, où 0 ≤ i, 0≤ j, 0 ≤ k et i + j + k = 1.

10. Source de lumière selon une ou plusieurs des revendications 8 et 9, **caractérisée en ce que** les phosphores sont agencés sur la source de lumière primaire de telle sorte que le phosphore émetteur de rouge soit essentiellement irradié par une lumière provenant de la source de lumière primaire, tandis que le phosphore de la formule I est essentiellement irradié par une lumière qui a déjà traversé le phosphore émetteur de rouge ou qui a été ainsi diffusée.

11. Source de lumière selon la revendication 10, **caractérisée en ce que** le phosphore émetteur de rouge est installé entre la source de lumière primaire et le phosphore de la formule I.

12. Unité d'éclairage, en particulier pour l'éclairage arrière de dispositifs d'affichage, **caractérisée en ce qu'**elle comprend au moins une source de lumière selon une ou plusieurs des revendications 8 à 11.

13. Unité d'éclairage selon la revendication 12, **caractérisée en ce que** le couplage optique entre le phosphore et la source de lumière primaire est réalisé au moyen d'un agencement de conduction de lumière.

14. Dispositif d'affichage, en particulier dispositif d'affichage à cristaux liquides (affichage LC), comportant un éclairage arrière, **caractérisé en ce qu'**il comprend au moins une unité d'éclairage selon la revendication 12 ou 13.

15. Utilisation d'un mélange selon une ou plusieurs des revendications 1 à 6 en tant que phosphore de conversion pour la conversion partielle ou complète de l'émission de bleu ou des UV proches à partir d'une diode luminescente.
